# EUROPEAN PATENT APPLICATION

(11) **EP 3 715 545 A1**
(43) Date of publication of application: **30.09.2020**
(21) Application number: 19897224.2
(22) Date of filing: 05.09.2019
(51) Int. Cl.: E03C 1/324, E03C 1/328, G08B 13/08, G08B 13/16, G08B 13/19

(54) **AUTOMATIC WASHSTAND CONTROL SYSTEM**

(30) Priority: 10.12.2018 KR 20180157765
(71) Applicant: UD SYSTEM CO., LTD, Gunpo-si Gyeonggi-do 15809 (KR)
(72) Inventor: HONG, Soon Jin, Uiwang-si Gyeonggi-do 16039 (KR); WOO, Kwang Bok, Seoul 06989 (KR)
(74) Representative: Hoffmann Eitle
(86) International application number: PCT/KR2019/011479
(87) International publication number: WO 2020/122363

(57) **Abstract**

Discloses an automatic control system of a washstand.

When a sensing device for sensing a person entering through a plurality of doors in a home or a building is installed, and after sensing the person entering and exiting the door, it is determined that the sensed person moves to a place in which a washstand is installed, the present embodiment provides an automatic control system of the washstand that a stature of the sensed person is measured accurately, and not only the height of the washstand located in the bathroom may be automatically adjusted but also the user may adjust finely the washstand when the person arrives at the washstand or presses a button according to the measured stature information.

## Description

### [Technical Field]

The present embodiment relates to an automatic control system of a washstand.

### [Background Art]

Contents described below merely provide background information related to the present embodiment and do not constitute the related art.

A washstand refers to a facility capable of washing. Generally, each home or building has the washstand in a toilet. Generally, the washstand is fixedly installed.

In general, the washstand is constructed with a position fixed on one side of a wall of the toilet.

In general, since the fixed washstand is installed at a height that may be used by adult men and women, there are inconveniences for an adult short in stature, child, or handicapped person to use the washstand.

In other words, the washstand installed inside a bathroom has a fixed height. The fixed washstand causes inconvenience for family members to use together, and in particular, when a child, an elderly person, or a physically handicapped person live together, great difficulties occur.

Recently, as nutritional intake has improved, a stature difference between individuals has increased, and such inconvenience is further increased.

As a conventional technique for solving the above-described problems, there has been an adjusting device for adjusting a height of the washstand by pressing a button by a user or manually adjusting the height.

However, there are users who have a difficulty in using not only their body but also their fingers among persons who need a conventional height-adjustable washstand, so that the above-described conventional method may be inconvenient for the users.

In case of the conventional height-adjustable washstand, there is a high concern about safety hazards caused by automatic movement and an electronic device failure due to toilet moisture.

Like air conditioners, the washstands require specialization and are relatively expensive to install. It is important to manufacture to minimize installation costs.

In particular, a number of households with one or two people is increasing due to social factors such as nuclear family, life span, divorce and non-marriage. It may happen that a person falls down on a slippery floor in a bathroom and does not get up, or when the bathroom temperature is low or when taking a bath in hot water in the winter, the person falls and loses consciousness due to a blood pressure problem. It is a social structure in which there is no choice but to increase a case that since few families take care of someone, even when an accident occurs, he or she may not be found for a long time, and may not receive proper help. In particular, when a resident is an elderly person, it is necessary to help when the person falls down in the bathroom.

Therefore, there is a need for a technique for a height adjustable washsta nd, which is out of conventional methods.

### [Technical Problem]

When a sensing device for sensing a person entering through a plurality of doors in a home or a building is installed, and after sensing the person entering and exiting the door, it is determined that the sensed person moves to a place in which a washstand is installed, the present embodiment is directed to providing an automatic control system of the washstand that a stature of the sensed person is measured accurately, and not only the height of the washstand located in the bathroom may be automatically adjusted but also the user may adjust finely the washstand when the person arrives at the washstand (or pressing a button) according to the measured stature information.

### [Technical Solution]

According to one aspect of the present invention, there is provided an automatic control system of a washstand including: a measuring apparatus that senses a person entering or exiting a door by using a sensing unit provided on one side of a plurality of doors in a house, and when it is determined that the person moves to a place in which a washstand is installed, measures a stature of the person at a position closest to the washstand, and wirelessly transmits the measured stature information: and a washstand adjusting apparatus receiving the stature information and then calculating height information corresponding to the stature information, and primarily adjusting a height of the washstand electronically based on the height information.

### [Advantageous Effects]

As described above, according to the present embodiment, in the present embodiment, when a sensing device for sensing a person entering through a plurality of doors in a home or a building is installed, and after sensing the person entering and exiting the door, it is determined that the sensed person moves to a place in which a washstand is installed, there is an effect that a stature of the sensed person is measured accurately, and not only the height of the washstand located in the bathroom may be automatically adjusted but also the user may adjust finely the washstand when the person arrives at the washstand (or pressing a button) according to the measured stature information.

According to the present embodiment, there is an effect that not only the height of the washstand may be automatically adjusted according to the stature of the person moving to the place in which the washstand is installed in the home, but also the user may arbitrarily adjust the height of the washstand according to his/her body condition in order to finely adjust according to the stature of the user.

According to the present embodiment, the height of the washstand is electronically automatically adjusted primarily according to the height of the user's stature, but when the user desires to secondarily finely adjust the height of the washstand, there is an effect that the convenience in use is improved by providing a structure capable of height adjustment.

### [Description of Drawing portions]

FIG. 1 is a view schematically showing an automatic control system of a washstand according to the present embodiment.
FIG. 2 is a view illustrating an emergency communication service provision in an automatic control system of a washstand according to the present embodiment.
FIG. 3 is a block diagram schematically showing a measuring apparatus according to the present embodiment.
FIG. 4 is a block diagram schematically showing a washstand adjusting apparatus according to the present embodiment.

**[Description of Reference Numerals]**

| | |
|---|---|
| 110: Measuring apparatus | 120: Washstand adjusting apparatus |
| 112: Door opening/closing sensing unit | |
| 114: Object detection sensing unit | 115: Object direction detection unit |
| 116: Stature measuring unit | 126: Adjusting side communication unit |
| 210: Terminal | |
| 310: Height adjusting unit | |

### [Modes of the Invention]

Hereinafter, the present embodiment will be described in detail with reference to the accompanying drawings.

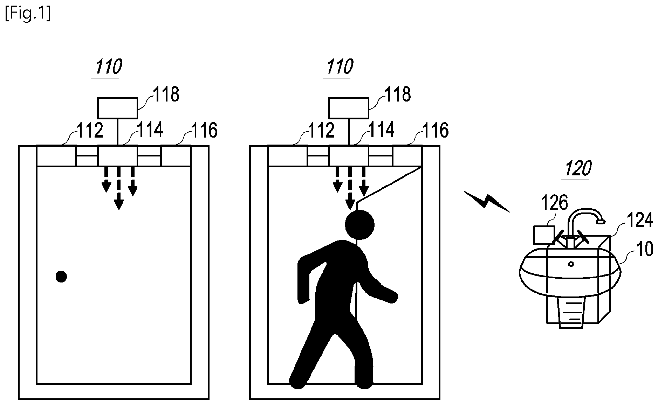

FIG. 1 is a view schematically showing an automatic control system of a washstand according to the present embodiment.

The automatic control system of the washstand according to the present embodiment includes a measuring apparatus 110 and a washstand adjusting apparatus 120. A component included in the automatic control system of the washstand is not necessarily limited thereto.

In the automatic control system of the washstand according to the present embodiment, the measuring apparatus 110 is mounted on a plurality of doors in a house (for example, an upper end of a door sill at an entrance of a toilet).

The measuring apparatus 110 senses whether a person goes in or out of a door, and measures a stature of the sensed person. The measuring apparatus 110 transmits stature information of the person to the washstand adjusting apparatus 120. The measuring apparatus 110 performs sensing only when the door is opened with a power saving function. The measuring apparatus 110 performs the power saving function so that an included sensor is turned off when the door is closed basically.

The measuring apparatus 110 is mounted on an upper portion of the door. The reason why the measuring apparatus 110 is not attached to an upper portion of a washstand 10 is to ensure durability due to a problem of moisture prevention. The washstand 10 is installed in a toilet or a bathroom, but since the toilet or the bathroom is extremely humid, the measuring apparatus 110 is deteriorated. However, since the measuring apparatus 110 according to the present embodiment is mounted on the upper portion of the door, it is protected from moisture.

Since the measuring apparatus 110 is manufactured in a box shape, it may be easily installed on the upper side of the door. In addition, from a user's perspective, rather than going in front of the washstand 10 and pressing a specific button or waiting for a height of the washstand 10 to be adjusted, it is more convenient to automatically adjust the height of the washstand 10 at the same time as entering the toilet or the bathroom. The measuring apparatus 110 measures a stature of a person who enters or exits the door by using an ultrasonic or infrared (IR) sensor installed on a door frame.

The washstand adjusting apparatus 120 automatically adjusts the height of the washstand 10 based on the stature information received from the measuring apparatus 110. The washstand adjusting apparatus 120 includes not only a height adjusting unit 310 but also a hydraulic adjusting unit 320. When the person moves to a place in which the washstand is located, the automatic control system of the washstand recognizes this and automatically adjusts the height of the washstand by IoT fusion.

When a person moves to a place in which the washstand is installed (for example, toilet and bathroom), and the person enters by opening the bathroom door, the stature of the person is measured by the measuring apparatus 110 installed on the door. The washstand adjusting apparatus 120 receives the stature information of the person from the measuring apparatus 110 and adjusts the height of the washstand 10 based on the received stature information.

The washstand adjusting apparatus 120 may recognize an appropriate height of the washstand, which is 1/2 of the measured stature information of the person to adjust the height of the washstand 10. The washstand adjusting apparatus 120 may adjust an electric or hydraulic cylinder in order to adjust the height of the washstand 10.

When the stature of the user is recognized at the measuring apparatus 110, the height of the washstand 10 is automatically adjusted by the washstand adjusting apparatus 120. The washstand adjusting apparatus 120 wirelessly receives stature information of a person, and electrically or hydraulically adjusts the height of the washstand 10.

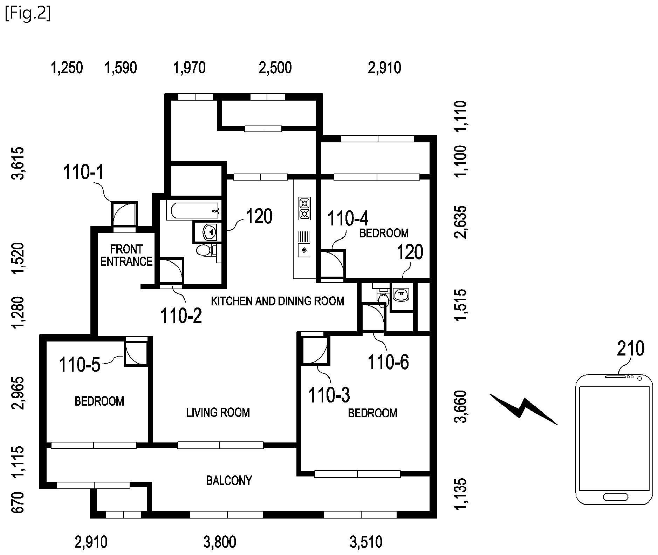

FIG. 2 is a view illustrating an emergency contact service provision in an automatic control system of a washstand according to the present embodiment.

The automatic control system of the washstand according to the present embodiment may be used as an emergency contact system of sensing operation stop.

The measuring apparatus 110 according to the present embodiment may be installed on a toilet entrance/exit door, a bedroom entrance/exit door, an external entrance/exit door, etc., to determine whether there is a person moving in and out of the door.

The measuring apparatus 110 may be installed on a ceiling or mounted on the upper portion of the door frame of the door to recognize movement of a resident. The measuring apparatus 110 may notify the movement of the resident to a management room terminal or a guardian terminal 210.

The management room terminal or the guardian terminal 210 may confirm the movement of the resident by using an installed application, and may stop determination of the movement of the resident when the resident does not want it.

In other words, the automatic control system of the washstand according to the present embodiment may be linked to a smart home network and sense the movement stop of the resident to automatically notify an emergency contact network.

The automatic control system of the washstand according to the present embodiment may be linked to the smart home network to notify an emergency contact to a preset management room or a guardian's mobile phone when an elderly person living alone does not out of the toilet even though a predetermined time has passed after entering the toilet.

The measuring apparatus 110 recognizes that the user has entered the toilet from the sensor installed on the door frame. The measuring apparatus 110 may recognize the user's movement at the time of manual adjustment of the washstand adjusting apparatus 120. The measuring apparatus 110 wirelessly transmits information to the smart home network when information indicating that the user has come out from the toilet after a predetermined time is not recognized.

The smart home network automatically notifies to the management room or a registered guardian terminal by integrating with the user's movement information obtained from other sensors connected to a wall pad by IoT. When the user does not want it, it is possible to stop a function of collecting information by being connected by IoT.

The measuring apparatus 110 automatically recognizes the stature of the user using the provided sensor and wirelessly transmits the stature of the user to the washstand adjusting apparatus 120. The washstand adjusting apparatus 120 receives stature information of the user, and automatically adjusts the height of the washstand. The washstand adjusting apparatus 120 has both an automatic operation function and a manual operation function. An operation method of the manual operation function should be intuitive. The washstand adjusting apparatus 120 may be implemented including a waterproof touch button and a height adjusting lever. The waterproof touch button is displayed vertically in an arrow shape so that anyone may easily understand the operation method. The height adjusting lever moves vertically so that anyone may easily understand the operation method.

The washstand adjusting apparatus 120 has a safety device to prevent injury when the washstand 10 is moved. The washstand adjusting apparatus 120 automatically adjusts the height of the washstand to match the user's stature when a person arrives at the washstand or presses the button. In addition, when the user approaches the washstand, an automatic adjustment function is stopped, and the user touches a touch sensor or operates a manual adjusting lever to operate the height adjustment manually.

The washstand adjusting apparatus 120 causes an LED bulb to blink while the height of the washstand is being adjusted so that the user recognizes that the washstand 10 is moving.

The washstand adjusting apparatus 120 is provided with an additional device to operate stably regardless of an error of an automatic function. The washstand adjusting apparatus 120 is provided with a manual function against malfunction of the automatic function. A manual operation by the manual adjusting lever or the touch sensor enables supplementary operation of the operating error.

Since a place in which the washstand adjusting apparatus 120 is installed (for example, a toilet) is a wet environment, a unit is configured to have high durability against moisture. The measuring apparatus 110 is installed outside the upper end of the toilet door frame so as to operate wirelessly.

The washstand adjusting apparatus 120 is implemented so as not to concern an electric safety accident such as electrical leakage. The washstand adjusting apparatus 120 adjusts the height of the washstand 10 not only electrically but also hydraulically as a height adjusting operation method.

The measuring apparatus 110 and the washstand adjusting apparatus 120 are provided with an ultra-low power saving function so as to reduce a battery replacement period as much as possible for convenience of the user. For example, in the measuring apparatus 110, when a door opens sufficiently to allow a person to pass through, a sensor is turned on, and the sensor for recognizing the stature of the user is operated. The measuring apparatus 110 is implemented by programming so that the sensor does not operate when the door is closed, and the sensor stops operating when the door is opened for a predetermined time.

The washstand adjusting apparatus 120 includes a small hydraulic power generator and a small power storage device, and when tap water is used, it is converted into electricity by using the small hydraulic power generator, and electricity is collected in the small power storage device, and then it is used to operate a height adjusting cartridge connected to a small motor and a gearbox. However, in case of emergency, an auxiliary battery will be mounted together.

The measuring apparatus 110 and the washstand adjusting apparatus 120 minimize a cost due to construction thereof. The measuring apparatus 110 and the washstand adjusting apparatus 120 are manufactured in an electronic form so as to be easily installed, and the operation method may be implemented so as to operate electrically or hydraulically.

The measuring apparatus 110 is manufactured to be easily attached to the door frame, and may be manufactured in a wireless method (such as BLE) to minimize electric wire landfill construction. A mobile application is provided so that a construction manager can manipulate a setting value during construction according to different door heights.

The mobile application collects/processes usage data to use it. The mobile application utilizes the measuring apparatus 110 installed on the door frame of a bathroom so as to notify to the management room by the emergency contact system via the smart home network or notify to an application installed on a family member's smartphone when a physical weak person such as an elderly person stops their activities. When there is no a door opening/closing sensor or a motion sensor associated with an existing emergency contact system, the door opening/closing sensor or the like may be additionally installed in the door frame so as to be linked.

The mobile application collects/processes washstand usage data so as to use it. A notification function is added to the mobile application to notify a cleaning time of the washstand and the like.

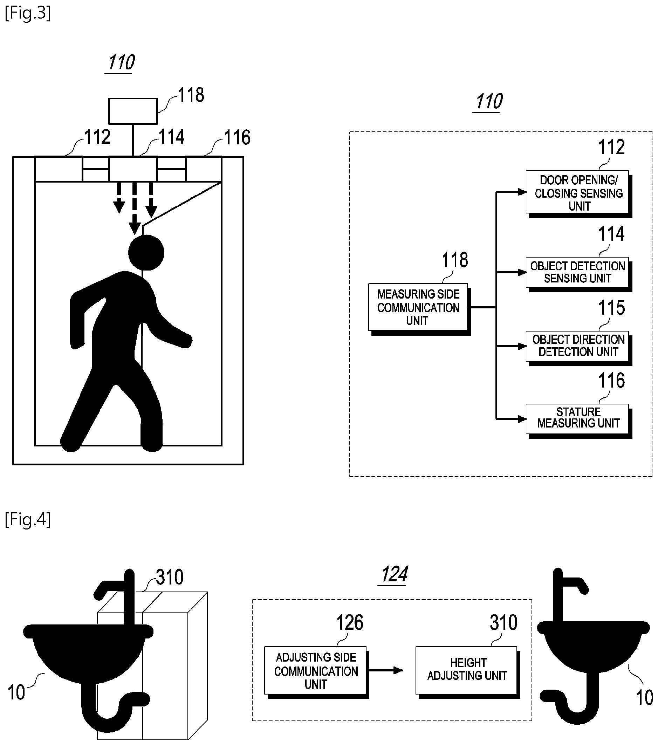

FIG. 3 is a block diagram schematically showing a measuring apparatus according to the present embodiment.

The measuring apparatus 110 according to the present embodiment includes a door opening/closing sensing unit 112, an object detection sensing unit 114, an object direction detection unit 115, a stature measuring unit 116, and a measuring side communication unit 118. Components included in the measuring apparatus 110 are not necessarily limited thereto.

Each component included in the measuring apparatus 110 may be organically operated by being connected to a communication path connecting a software-like module or a hardware-like module inside the apparatus. Such components communicate using one or more communication buses or signal lines.

Each component of the measuring apparatus 110 shown in FIG. 3 refers to a unit that processes at least one function or operation, and may be implemented as the software-like module, the hardware-like module, or a combination of software and hardware.

The measuring apparatus 110 senses a person entering or exiting a door by using a sensing unit provided on one side of a plurality of doors in a house. When it is determined that the person moves to a place in which a washstand is installed, the measuring apparatus 110 measures a stature of the person at a position closest to the washstand, and wirelessly transmits measured stature information to the washstand adjusting apparatus 120.

The door opening/closing sensing unit 112 senses whether the door is open or closed to generate a door opening/closing signal.

When the object detection sensing unit 114 receives the door opening/closing signal from the door opening/closing sensing unit 112, the object detection sensing unit 114 generates an object detection signal for detecting an object in an entrance or exit direction of the door. The object detection sensing unit 114 transmits an object detection signal to the object direction detection unit 115.

The object detection sensing unit 114 is any one sensor of an infrared sensor, a radar sensor, and a motion sensor, and recognizes only an object detected at a predetermined threshold value or more as a person.

When the object direction detection unit 115 determines that the moving direction of the object moves to the place in which the washstand is installed based on the object detection signal received from the object detection sensing unit 114, an activation command is generated to send it to the stature measuring unit 116.

The object direction detection unit 115 receives the object detection signal from the object detection sensing unit 114 mounted on at least one door to confirm whether the moving direction of the object is toward a preset one direction.

The object direction detection unit 115 is positioned at a place in which the washstand 10 is installed in the preset one direction, and recognizes that the moving direction is toward the place in which the washstand 10 is installed when a last received object detection signal is within the place in which the washstand 10 is installed and a preset range. The object direction detection unit 115 transmits the activation command to the stature measuring unit 116 provided at one side of a door closest to the place in which the washstand 10 is installed.

The stature measuring unit 116 receives the activation command from the object direction detection unit 115. The stature measuring unit 116 is switched from a dormant state to an activated state and measures the stature of the person to generate the stature information only when the activation command is received from the object direction detection unit 115.

The stature measuring unit 116 switches from the dormant state to the activated state based on the activation command received from the object direction detection unit 115. Thereafter, the stature measuring unit 116 emits ultrasonic waves or infrared rays so as to form a right angle with a head of the person who enters the door. The stature measuring unit 116 receives a reflection signal reflected from the head of the person.

The stature measuring unit 116 calculates the stature of the person based on a difference between a reception time at which the reflection signal is received and an emission time at which the ultrasonic waves or infrared rays are emitted. The stature measuring unit 116 is an IR sensor or an ultrasonic sensor, and is provided at the center of the upper end of the door sill closest to the place in which the washstand 10 is installed to emit the ultrasonic waves or the infrared rays to the head of the person.

The measuring side communication unit 118 is a communication unit performing a function of interlocking with the washstand adjusting apparatus 120 via a wireless network, and performs a function of transmitting and receiving various data. The measuring side communication unit 118 receives the stature information from the stature measuring unit 116.

The measuring side communication unit 118 wirelessly transmits the stature information to the washstand adjusting apparatus 120.

FIG. 4 is a block diagram schematically showing a washstand adjusting apparatus according to the present embodiment.

The washstand adjusting apparatus 120 according to the present embodiment includes an adjusting side communication unit 126 and a height adjusting unit 310. The components included in the washstand adjusting apparatus 120 are not necessarily limited thereto.

The washstand adjusting apparatus 120 wirelessly receives the stature information from the measuring apparatus 110 and then calculates height information corresponding to the stature information, and primarily adjusts the height of the washstand electronically based on the height information. The washstand adjusting apparatus 120 calculates the height information corresponding to 1/2 of the stature information as proper height information.

The washstand adjusting apparatus 120 calculates the height information corresponding to the stature information, and then electronically controls a cylinder attached to the washstand to move the washstand 10 vertically to a position corresponding to the height information.

The adjusting side communication unit 126 is a communication unit performing a function of interlocking with the measuring apparatus 110 via a wireless network, and performs a function of transmitting and receiving various data. The adjusting side communication unit 126 wirelessly receives the stature information from the measuring apparatus 110.

The height adjusting unit 310 calculates the height information corresponding to the stature information, and then primarily electrically controls an electric or hydraulic cylinder attached to the washstand 10 to move the washstand 10 vertically to a position corresponding to the height information.

The above descriptions are merely illustrative the technical spirit of the present invention. It will be understood by those skilled in the art that various modifications and variations may be made without departing from the essential features of the invention. Therefore, the embodiments disclosed in the present invention are not intended to limit the technical spirit of the present invention but to describe the present invention, and the scope of the technical spirit of the present invention is not limited by such embodiments. The scope of the present invention should be construed according to the following claims, and all technical spirits that fall within the equivalent scope thereof should be construed as being included in the scope of the present invention.

## Claims

1. An automatic control system of a washstand comprising:
a measuring apparatus that senses a person entering or exiting a door by using a sensing unit provided on one side of a plurality of doors in a house, and when it is determined that the person moves to a place in which a washstand is installed, measures a stature of the person at a position closest to the washstand, and wirelessly transmits the measured stature information; and
a washstand adjusting apparatus receiving the stature information and then calculating height information corresponding to the stature information, and primarily adjusting a height of the washstand electronically based on the height information.

2. The automatic control system of the washstand of claim 1, wherein the measuring apparatus comprises:
a door opening/closing sensing unit for sensing whether the door is open or closed to generate a door opening/closing signal;
an object detection sensing unit for generating an object detection signal for detecting an object in an entrance or exit direction of the door when receiving the door opening/closing signal;
an object direction detection unit for generating an activation command to send it to a stature measuring unit when determining that a moving direction of the object moves to a place in which the washstand is installed based on the object detection signal;
the stature measuring unit switched from a dormant state to an activated state and measuring the stature of the person to generate the stature information only when the activation command is received; and
a communication unit wirelessly transmitting the stature information to the washstand adjusting apparatus.

3. The automatic control system of the washstand of claim 2, wherein the object direction detection unit receives the object detection signal from the object detection sensing unit mounted on at least one door to confirm whether the moving direction of the object is toward a preset one direction, and is positioned at a place in which the washstand is installed in the preset one direction, and recognizes that the moving direction is toward the place in which the washstand is installed when a last received object detection signal is within the place in which the washstand is installed and a preset range, and transmits the activation command to the stature measuring unit provided at one side of a door closest to the place in which the washstand is installed.

4. The automatic control system of the washstand of claim 2, wherein the stature measuring unit switches from the dormant state to the activated state based on the activation command, and then emits ultrasonic waves or infrared rays so as to form a right angle with a head of the person who enters the door, and receives a reflection signal reflected from the head of the person, and
calculates the stature of the person based on a difference between a reception time at which the reflection signal is received and an emission time at which the ultrasonic waves or infrared rays are emitted.

5. The automatic control system of the washstand of claim 2, wherein the stature measuring unit is an IR sensor or an ultrasonic sensor, and is provided at a center of an upper end of a door sill closest to the place in which the washstand is installed to emit the ultrasonic waves or infrared rays to the head of the person.

6. The automatic control system of the washstand of claim 2, wherein the object detection sensing unit is any one sensor of an infrared sensor, a radar sensor, and a motion sensor, and recognizes only an object detected at a predetermined threshold value or more as the person.

7. The automatic control system of the washstand of claim 1, wherein the washstand adjusting apparatus calculates height information corresponding to 1/2 of the stature information as proper height information.

8. The automatic control system of the washstand of claim 1, wherein the washstand adjusting apparatus calculates the height information corresponding to the stature information, and then electronically controls a cylinder attached to the washstand to move the washstand vertically to a position corresponding to the height information.
